# EUROPEAN PATENT SPECIFICATION

(11) **EP 0 529 243 B1**
(45) Date of publication and mention of the grant of the patent: **14.02.1996**
(21) Application number: 92111311.4
(22) Date of filing: 03.07.1992
(51) Int. Cl.: B01D 53/68, B01D 53/86, F23J 15/00, B01J 8/28

(54) **Method of treating process gases or flue gases containing halogenous compounds**
Verfahren zur Behandlung von Halogenverbindungen enthaltenden Prozess- oder Rauchgasen
Méthode de traitement de gaz industriels ou gaz de fumées contenant des composés halogénés

(30) Priority: 09.08.1991 FI 913776
(43) Date of publication of application: 03.03.1993
(73) Proprietor: A.AHLSTROM CORPORATION, SF-29600 Noormarkku (FI)
(72) Inventor: Hiltunen, Matti, SF-48600 Karhula (FI); Westerlund, Kurt, SF-00150 Helsinki (FI)
(74) Representative: Füchsle, Klaus, Dipl.-Ing.

(56) References cited:
- WO-A-86/03690
- WO-A-90/13352
- WO-A-90/14559
- DE-A- 3 615 027

## Description

The present invention relates to a method of cooling flue or process gases containing halogenous compounds in two successive circulating fluidized bed reactors so that in the first circulating fluidized bed reactor the hot gases are cooled to a temperature of ≧400 °C and in the second circulating fluidized bed reactor the hot gases are quickly cooled below the temperature of 250 °C.

The present invention relates especially to a method of cooling flue or process gases resulting from treatment of materials containing chlorine or halogenized hydrocarbons, such as waste, biological sludge, metal concentrates, scrap metal, and slag, from, e.g., copper smelteries, the method being capable of minimizing environmentally harmful emissions.

The chlorine-containing environmental poisons resulting from incineration of municipal waste, combustion of biological sludges and smelting processes have been recognized as constituting a problem. It has been found that polychlorinated aromatic compounds categorized as superpoisons, such as coplanar PCB, polychlorinated dioxins and polychlorinated furans, are produced to a great extent in both municipal waste incinerator plants and industrial combustion plants for biological waste. Dioxins have also been found in flue gases from metal smelteries. These chlorine-containing compounds are superpoisonous for human beings and animals; they bring about genetic damage and are obviously also carcinogenic. Toxic compounds spread in the environment mostly bound to flue dust.

It has been found that the lower the temperature and the shorter the retention time, the greater the amount of resulting superpoisons. It has been found that combustion at 500-700°C is especially favourable for the formation of polychlorinated dioxins and furans. This has led to the conclusion that the combustion should be carried out at a higher temperature and with a longer retention time in order to decompose the super-toxins. On the other hand, it has also been suggested that the wastes could be safely destroyed by incinerating them at relatively low temperatures if the flue gases are post-combusted at such a high temperature that, for example, dioxin and furan toxins decompose.

It is, nevertheless, not always possible to maintain a temperature suitable for decomposing the super-toxins in the actual process or post-combustion. It has additionally been found that the super-toxins are easily re-formed in the later stages of the process, also after the post-combustion.

Dioxins are formed by synthetization from chlorine compounds in the presence of coal, water and oxygen at favourable temperatures, for example, in flue gases. It has been established that a great portion of the dioxins of fly ash is formed only after the combustion by means of a so-called "de novo synthesis" in heat exchangers and the stack because the "de novo synthesis" of the dioxins is to a great extent dependent on the temperature, and the temperature of 250 to 400°C is especially suitable for this synthesis. Efforts have been made, by as complete as possible a combustion, by a high combustion temperature and a long retention time, to produce fly ash containing as little carbon as possible, whereby the synthesis would be prevented. By separating metals from the wastes, it has also been attempted to decrease the amount of polychlorinated aromats in the flue gases.

US-A-4,762,074 suggests the combustion of wastes containing pre-stages of toxic dioxins and furans by means of oxygenated air at a high temperature, at least 1200°C, for decomposing the toxins. By using a highly excessive amount of oxygen, it is also attempted to maintain the amount of the nitrogen oxides, which increase at high temperatures, at an acceptable level.

Swedish patent specification 453 777 discloses a method of combusting solid waste in a reactor in a bubbling fluidized bed at a temperature below 900°C. In the reactor, above the actual fluidized bed, the temperature of the flue gases is raised to at least 950°C by adding secondary air and insulating the reactor walls. The temperature of the flue gases is maintained at the level above 950°C for as long as required for the hydrocarbons and dioxins to become decomposed, by conducting the flue gases through an uncooled gas duct. The gases are cooled prior to the heat exchangers by injecting air or flue gases into the gases.

US-A-4,794,871 discloses a method comprising two or three stages, in which the waste is first treated in a rotary drum at a temperature of at most 500°C and the solid waste formed thereby is then treated at a temperature of at least 500°C, preferably at 500 to 1000°C, for destroying the toxic substances. The flue gases from both stages are combined and combusted at such a high temperature that the toxic compounds of the gases are completely decomposed.

Swedish patent application 8406090-4 discloses a method in which wastes harmful to the environment and containing chlorinated hydrocarbons are incinerated substoichiometrically at a temperature of at least 1200°C. The combustion is effected as plasma incineration. According to the patent application, re-formation of toxic compounds is prevented by bringing the flue gases that have been cooled to a temperature of 350 to 700°C, into contact with lime for separating chlorine from the gases. Chlorine separation is preferably effected by conducting the gases through a vertical reactor filled with lime. At low temperatures, however, polychlorinated aromats are produced quickly before the chlorine has become bound to lime. Thus the method does not lead to a desirable result.

US-A-4,983,366, among others, suggests decomposing the toxic polyhalogens in a two-stage catalytic treatment. In the method the gases are firstly directed through an oxidizing catalytic cracking stage and secondly through a catalytic post-combustion stage.

WO-A-90 14 559, in the name of the present applicant, discloses a method of treating various materials such as wastes, biological sludges or metal oxide concentrates, which materials contain halogenated hydrocarbon compounds, at a high temperature and of cooling resultant process gases for minimizing the amount of polyhalogenated compounds harmful to the environment, such as dioxins and furans, in the emissions of combustion processes. According to this prior method the materials to be treated are first heated or combusted in the presence of gas containing oxygen in such a manner that the halogenated hydrocarbon compounds which may be contained in the materials and which are harmful to the environment decompose. The process gases that thereby result are quickly cooled past the temperature range of 250 to 400°C which temperature range is favourable for the new formation of halogenated hydrocarbon compounds, i.e. the gases are quickly cooled to a temperature below 250°C, whereby the synthetization of the compounds harmful to the environment, such as dioxins and furans, from the chlorine-containing compounds in the gases is avoided, the cooling velocity being at least 300°C per second.

WO-A-90 13 352 discloses a process for treating a gas stream containing C₁ organohalogen compounds that do not have any carbon-hydrogen bonds comprising contacting the gas stream at a temperature of about 200 to about 500°C with a catalyst comprising titania in the presence of an effective amount of water to convert said organohalogen compound to carbon dioxide and haloacids.

An object of the present invention is to provide a simple method of minimizing the emissions of polyhalogenated hydrocarbon compounds in plants forming hot process or flue gases.

The invention is as defined in the accompanying claims of which Claim 1 has been divided into a two part form based on the assumption that WO-A-90 14 559 is the nearest state of the art.

Characteristic features of the method according to the invention are that
- the process or flue gases, the temperature of which is >700 °C, are introduced as fluidizing gas to the first circulating fluidized bed reactor and cooled therein to 400-700 °C;
- the retention time of the gases in the first circulating fluidised bed reactor is 1-10 seconds, and that
- in the first circulating fluidized bed reactor the gases are brought into contact with a catalytic material capable of decomposing polyhalogen compounds.

Preferably the retention time of the gases in the first circulating fluidized bed reactor in a temperature of 400-700 °C is 2-5 seconds, in which time the catalytic material effects a complete decomposition of the dioxins and furans contained in the gas.

Preferably the catalyst is a metal powder, such as Zn, Cu, Ni, Cr, Fe, Al, Pb, other metal or an alloy, metal oxide, such as ZnO, NiO, Cr₂O₃, FeO, Fe₃O₄, PbO, CaO, MgO, other metal oxide or mixture thereof or a metal salt, such as Na₂CO₃, K₂CO₃, CaCO₃. Preferably the catalytic material consists of a catalytically active metal, metal oxide or metal salt dust, which is entrained with the process gas and allowed to form at least partly the bed material of the circulating fluidized bed reactor. The circulating fluidized bed reactor can be located, for example, after the shaft furnace of a scrap copper smeltery. The flue gases from the furnace contain the contaminants contained by the scrap material, for example ZnO, PbO, SnO etc. These contaminants are separated in the dust separator of the circulating fluidized bed reactor to remain as bed material and act thus as catalysts to decompose organic chlorine compounds.

In a circulating fluidized bed reactor the hot gases conducted therein as fluidizing gas are very quickly cooled when they are mixed with the circulating bed particles colder than the gas. Usually the rate of cooling in the mixing chamber is >500 °C/s, preferably more than 1000 °C/s.

According to an embodiment of the invention, the cooling installation according to the invention has been connected to the radiation chamber of a waste heat boiler of a metal smeltery. The gases are exhausted at a temperature of about 700-1200 °C from the radiation chamber and are then directed as fluidizing gas to the first circulating fluidized bed reactor, wherein the gases are cooled to 400-700 °C. The bed material is at least partly formed by metal oxide, e.g., zinc oxide, which acts as a catalyst in the decomposing reaction of the dioxins and furans. The retention time of the gases in the reactor is preferably 2-5 seconds. If necessary, ash-containing bed material can be removed from the circulating fluidized bed reactor. New catalyst-containing bed material is introduced into the reactor either by adding some as needed or by allowing at least some of the metal oxide dust contained in the flue gases to remain as bed material. From the first circulating fluidized bed reactor the gas, from which the catalyst has been separated, is introduced into the second circulating fluidized bed reactor, in which the final cooling of the gas is effected. When the gases are exhausted from the first reactor, they are in a temperature of about 400-700 °C, from which temperature they are rapidly cooled in the second reactor past the temperature area 250-400 °C, which is suitable for the "de novo" synthesis of dioxins and furans. The rate of cooling is >500 °C/s, prerefably >1000 °C/s. Thus the gases are cooled almost immediately to a temperature of below 250 °C upon entering the mixing chamber of the second reactor. In the second circulating fluidized bed reactor the gases can be cooled to 180 °C, or even below that, if needed, after which the gases can be conducted to, e.g., a bag filter for final cleaning.

By cooling the gases rapidly past the temperature area most suitable for, e.g., dioxin synthesis, 250-600 °C, the formation of these polyhalogenous aromatic compounds is minimized. Besides, substances that either react with the chlorine, fluorine and sulphur compounds or absorb these compounds, can be added to the circulating bed material of either the first or the second reactor to remove these compounds from the gases. At the same time a considerable part of the heavy metals and their compounds that are contained in the flue gases and that melt and vaporize at a low temperature, such as Hg, As, Zn, Cd, Pb and Sn, can be separated from the gases by condensating them into the circulating bed material in the cooling reactors. Particles can be removed from the circulation of the cooling reactor either continuously or intermittently for removing harmful or recoverable substances from the circulation. New particles are accordingly added to maintain the circulating material needed for the gas cooling process.

In the following the invention is described in closer detail by way of reference to the accompanying schematic drawing.

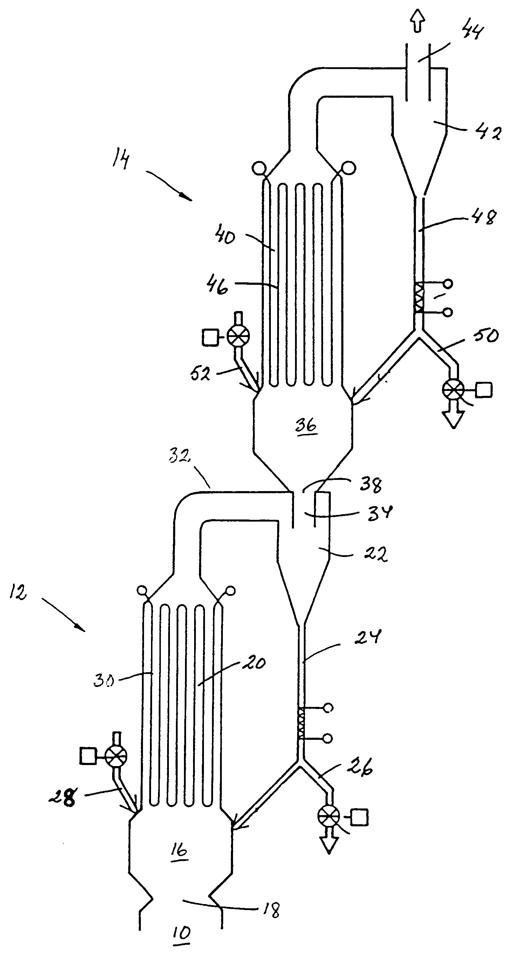

The figure illustrates a two-stage gas cooling installation connected to the radiation chamber 10 of a waste heat boiler of a metal smeltery, the cooling installation comprising a first 12 and a second 14 circulating fluidized bed reactor.

The mixing chamber 16 of the first reactor 12 is connected from its lower portion to the gas outlet 18 of the radiation chamber 10, through which outlet the process gases flow into the mixing chamber as fluidizing gas. The bed material of the first fluidized bed reactor contains at least some metal oxide-containing catalytic material capable of acting as a catalyst in the decomposition reaction of dioxins and furans.

Dioxins and furans are destroyed catalytically on the metal oxide surfaces at a temperature of 120-500 °C during the retention time of 1-4 seconds. According to the invention the temperature of the gas is lowered in the first circulating fluidized bed reactor to 400-700°C, at which it is maintained for 1-10 seconds, preferably 2-5 seconds, thus enabling the catalysing effect to be utilized.

From the mixing chamber 16 the gases flow through the riser 20 to the particle separator 22, in which the bed material particles are separated from the gas. The separated particles are conducted back to the mixing chamber via the recycling duct 24. A portion of the separated particles can be removed from the circulation by duct 26, thus enabling the removal of used catalyst or particles separated from the gas from the circulation. New catalytic material can be added via duct 28. The circulating bed material is cooled by heat transfer surfaces 30 provided at the riser.

Preferably the particles of the catalytic material are small enough to flow with the gas to the upper portion of the riser and further therefrom to the particle separator 22 via duct 32 but nonetheless coarse enough to be separated in the particle separator.

The gas outlet duct 34 from the particle separator has been arranged to communicate with the inlet 38 of the mixing chamber 36 of the second circulating fluidized bed reactor 14. The gases, now free of toxic polyhalogenous compounds because of the purifying effect of the catalyst in the first reactor, flow as fluidizing gas into the mixing chamber of the second reactor and are rapidly cooled by the circulating material to below the temperature zone suitable for "de novo" synthesis.

The gases flow from the mixing chamber 36 through the riser 40 to the second particle separator 42, wherefrom they are exhausted free of particles through outlet 44. In the riser the gases and particles are cooled by heat transfer surfaces 46. The main portion of the separated particles is recycled to the mixing chamber through recycling duct 48. A portion of the separated particles can, when needed, be removed from the circulation via conduit 50 and they can be directed to the first reactor or to the main process to be combusted. New circulating bed material can be added via duct 52.

## Claims

1. A method of cooling hot halogenous compounds-containing process or flue gases in two subsequent circulating fluidized bed reactors, the hot gases being cooled in the first circulating fluidized bed reactor so that the temperature of the gases is after the cooling still equal or more than 400 °C and in the second fluidized bed reactor so that the temperature of the gases will quickly fall below the temperature of 250 °C, characterized in that
- the hot process or flue gases, the temperature of which is >700 °C, are conducted as fluidizing gas into the first fluidized bed reactor, in which they are cooled to 400-700 °C,
- the retention time of the gases in the first circulating fluidized bed reactor is 1-10 seconds, and that
- in the first circulating fluidized bed reactor the gases are brought into contact with a catalytic material capable of destroying polyhalogenous compounds.

2. The method according to claim 1, characterized in that the retention time of the hot gases within the temperature range of 400-700 °C is 2-5 seconds.

3. The method according to claim 1, characterized in that the catalytic material in the first circulating fluidized bed reactor consists at least partly of metal oxides.

4. The method according to claim 1, characterized in that the catalytic material is one of the following oxides: zinc oxide, lead oxide, iron oxide, copper oxide, nickel oxide, aluminum oxide or silicon oxide.

5. The method according to claim 4, characterized in that the catalytic material is zinc oxide or a mixture of zinc and lead oxide.

6. The method according to claim 1, characterized in that in the mixing chamber of the first circulating fluidized bed reactor the hot gases are cooled to 400-700 °C.

7. The method according to claim 1, characterized in that the rate of cooling in the second circulating fluidized bed reactor is controlled so as to be >500 °C/s.

8. The method according to claim 1, characterized in that at least a portion of the catalytic material in the first fluidized bed reactor is metal salt.

9. The method according to claim 1, characterized in that at least a portion of the catalytic material in the first fluidized bed reactor is metal powder.

## Patentansprüche

1. Verfahren zur Abkühlung von heißen halogenhaltige Verbindungen enthaltenden Prozeß- oder Rauchgasen in zwei aufeinanderfolgenden zirkulierenden Wirbelschichtreaktoren, welche heißen Gase im ersten zirkulierenden Wirbelschichtreaktor auf solche Weise, daß die Temperatur der Gase nach dem Abkühlen nach wie vor gleich oder größer 400 °C ist und im zweiten zirkulierenden Wirbelschichtreaktor auf solche Weise abgekühlt werden, daß die Temperatur der Gase schnell unter 250 °C absinkt, dadurch gekennzeichnet, daß
- die heißen Prozeß- oder Rauchgase, deren Temperatur bei > 700 °C liegt, als Fluidisierungsgas in den ersten Wirbelschichtreaktor geleitet werden, wo sie auf 400 bis 700 °C abgekühlt werden,
- die Verweilzeit der Gase im ersten zirkulierenden Wirbelschicritreaktor 1 bis 10 Sekunden beträgt, und daß
- die Gase im ersten zirkulierenden Wirbelschichtreaktor mit einem katalytischen, zur Zersetzung von Polyhalogenverbindungen fähigem Material in Kontakt gebracht werden.

2. Verfahren nach Anspruch 1, dadurch gekennzeichnet, daß die Verweilzeit der heißen Gase im Temperaturbereich von 400 bis 700 °C bei 2 bis 5 Sekunden liegt.

3. Verfahren nach Anspruch 1, dadurch gekennzeichnet, daß das katalytische Material im ersten zirkulierenden Wirbelschichtreaktor zumindest teilweise aus Metalloxiden besteht.

4. Verfahren nach Anspruch 1, dadurch gekennzeichnet, daß das es sich beim katalytischen Material um eines der folgenden Oxide handelt: Zinkoxid, Bleioxid, Eisenoxid, Kupferoxid, Nickeloxid, Aluminiumoxid oder Siliziumoxid.

5. Verfahren nach Anspruch 4, dadurch gekennzeichnet, daß das katalytische Material Zinkoxid oder ein Gemisch aus Zink- und Bleioxid ist.

6. Verfahren nach Anspruch 1, dadurch gekennzeichnet, daß die heißen Gase in der Mischkammer des ersten zirkulierenden Wirbelschichtreaktors auf 400 bis 700 °C abgekühlt werden.

7. Verfahren nach Anspruch 1, dadurch gekennzeichnet, daß die Kühlgeschwindigkeit im zweiten zirkulierenden Wirbelschichtreaktor so reguliert wird, daß sie bei > 500 °C/ s liegt.

8. Verfahren nach Anspruch 1, dadurch gekennzeichnet, daß zumindest ein Teil des katalytischen Materials im ersten Wirbelschichtreaktor Metallsalz ist.

9. Verfahren nach Anspruch 1, dadurch gekennzeichnet, daß zumindest ein Teil des katalytischen Materials im ersten Wirbelschichtreaktor Metallpulver ist.

## Revendications

1. Procédé pour refroidir des gaz industriels ou de fumées contenant des composés halogénés chauds dans deux réacteurs à lit fluidisé circulant successifs, les gaz chauds étant refroidis dans le premier réacteur à lit fluidisé circulant de façon que la température des gaz soit, après le refroidissement, toujours égale ou supérieure à 400°C, et dans le second réacteur à lit fluidisé de manière que la température des gaz soit rapidement abaissée au-dessous de 250°C, caractérisé en ce que
- les gaz industriels ou de fumées, dont la température est > 700°C, sont conduits en tant que gaz de fluidisation dans le premier réacteur à lit fluidisé, dans lequel ils sont refroidis à 400-700°C,
- le temps de séjour des gaz dans le premier réacteur à lit fluidisé circulant est de 1-10 secondes, et en ce que
- dans le premier réacteur à lit fluidisé circulant les gaz sont amenés au contact d'un matériau catalytique capable de détruire des composés polyhalogénés.

2. Procédé selon la revendication 1, caractérisé en ce que le temps de séjour des gaz chauds compris dans la plage de température de 400 à 700°C est 2-5 secondes.

3. Procédé selon la revendication 1, caractérisé en ce que le matériau catalytique dans le premier réacteur à lit fluidisé circulant consiste au moins partiellement en oxydes métalliques.

4. Procédé selon la revendication 1, caractérisé en ce que le matériau catalytique est l'un des oxydes suivants : l'oxyde de zinc, l'oxyde de plomb, l'oxyde de fer, l'oxyde de cuivre, l'oxyde de nickel, l'oxyde d'aluminium ou l'oxyde de silicium.

5. Procédé selon la revendication 4, caractérisé en ce que le matériau catalytique est de l'oxyde de zinc ou un mélange d'oxyde de zinc et de plomb.

6. Procédé selon la revendication 1, caractérisé en ce que dans la chambre de mélange du premier réacteur à lit fluidisé circulant, les gaz chauds sont abaissés à 400-700°C.

7. Procédé selon la revendication 1, caractérisé en ce que la vitesse de refroidissement dans le second réacteur à lit fluidisé circulant est contrôlée de façon qu'elle soit > 500°C/s.

8. Procédé selon la revendication 1, caractérisé en ce que au moins une partie du matériau catalytique dans le premier réacteur à lit fluidisé est un sel métallique.

9. Procédé selon la revendication 1, caractérisé en ce que au moins une partie du matériau catalytique dans le premier réacteur à lit fluidisé est une poudre métallique.
